## Europäisches Patentamt

## European Patent Office

## Office européen des brevets

(19)

(11) Publication number: **0 112 477**
A1

(12)

# EUROPEAN PATENT APPLICATION

(21) Application number: **83111305.5**

(22) Date of filing: **24.09.80**

(51) Int. Cl.³: **G 06 F 13/00, H 04 B 7/185**

(30) Priority: **27.09.79 US 79602**
**27.09.79 US 79601**

(43) Date of publication of application: **04.07.84**
**Bulletin 84/27**

(84) Designated Contracting States: **BE DE GB IT NL SE**

(60) Publication number of the earlier application in accordance with Art. 76 EPC: **0026635**

(71) Applicant: **COMMUNICATIONS SATELLITE CORPORATION, 950 L'Enfant Plaza, S.W., Washington, D.C. 20024 (US)**

(72) Inventor: **Warner, Brady, 1063 Quail Ridge Drive, Santa Maria California 93455 (US)**
Inventor: **Deal, Joseph H., Jr., 541 Pheasant Lane, Clarksburg Maryland (US)**
Inventor: **Gupta, Shanti S., 153609 Bondy Lane, Gaithersburg Maryland (US)**

(74) Representative: **Needle, Jacqueline et al, PAGE, WHITE & FARRER 5 Plough Place New Fetter Lane, London EC4A 1HY (GB)**

(54) **TIM bus structure and data reorganization apparatus.**

(57) A plurality of terrestrial interface modules (TIMs) (15a, 15b....15n) are multiplexed and demultiplexed with common equipment through the use of mapping RAMs contained in each TIM. The common equipment provides identical addresses to each of the mapping RAMs in the TIMs. The mapping RAMs in each TIM determine whether incoming or outgoing data is to be written into or read from the associated TIM, and generate an address for the data so written into or read from the TIM. A mapping RAM is further provided in the common equipment to allow for burst-to-burst selection of data. A stream of data in standard PCM format is written into sequential locations of buffer memories, and subsequently read out of the memories in a different order so as to effect a reorganization of the PCM data. The reorganization of data packs all the bits associated with a single channel into a single contiguous block of time for an entire frame of data.

0112477

## TIM BUS STRUCTURE AND
## DATA REORGANIZATION APPARATUS

The present invention relates to the field of satellite communications and relates to data rearrangement and allocation among a plurality of users in a time multiplexed environment.

The invention herein disclosed finds particular utility when employed in conjunction with satellite communication apparatus and techniques generally disclosed in the following European Patent Applications:

EP-A-0026602 claiming the priority date of 27th September, 1979, from U.S. Application No. 79681 and published 8th April, 1981;

EP-A-0026603 claiming the priority date of 27th September, 1979, from U.S. Application No. 79619 and published 8th April, 1981;

EP-A-0027006 claiming the priority date of 27th September, 1979, from U.S. Application No. 79655 and published 15th April, 1981.

Prior art pulse code modulation (PCM) time division multiplexed (TDM) communications typically involve sampling a plurality of channels in a sequence of time and producing a digital word related to the value of the individual channel so sampled. After each of the channels has been sampled, the process is repeated a number of times to product a PCM frame. Although this is a standard technique of providing PCM/TDM data, the bit stream so organized is difficult to handle for certain applications insofar as the digital samples for the various channels are interleaved. Furthermore, an interruption at a particular point of time in the transmission of the data stream will cause a temporary loss of information in substantially all of the communication channels.

The ground stations of satellite communications systems generally involve a plurality of users attached to the ground station transmitter through common equipment. In prior art systems the plurality of users or "interface modules" were multiplexed and demultiplexed to and from the common equipment generally by employing well-known multiplexers and demultiplexers. The bus structures involved in the multiplexing/demultiplexing operations were configured in a variety of ways such as the radial, party-line (bus), or daisy chain configurations. These prior art techniques are generally large in size and inflexible in nature. That is, the channel allocation for each burst of data for each of the interface modules must be preset by the multiplexer/demultiplexer and changes in channel and/or burst allocation for any one of the interfaced modules requires a substantial reorganization of the multiplex-demultiplex operation.

Techniques have been proposed for rearranging data. For example US-A-3 806 879 describes the rearranging of the order of PCM channels such that all digitized voice samples from the same channel are contiguous in a single earth station burst. DE-A-2 164 016 discloses a similar rearrangement technique.

The present invention uses different techniques for rearranging data which give the system a flexibility here untofore unobtainable.

According to the present invention there is provided apparatus for selectively multiplexing a plurality of data sources with equipment common to each of said data sources, comprising a first memory means in each of said data sources for receiving and storing input data at a data rate, said first memory means in response to an output enable signal (OE) and a plural bit read address signal ($A_0$-$A_7$), providing to said common equipment data specified by said read address signal, and second memory means in each said data source for providing a second memory output comprising at least a portion of said read address signal, characterized in that said common equipment includes counter means for counting at said data rate, said counter means having a first section providing a first portion ($A_0$, $A_1$, $A_5$, $A_6$, $A_7$) of said read address signal ($A_0$-$A_7$) and having a second section, and in that said second memory means receives a plural bit output from said second counter section as an address input and provides a corresponding second memory output as a second portion ($A_2$, $A_3$, $A_4$) of said read address signal ($A_0$-$A_7$).

The invention also extends to apparatus for selectively multiplexing a plurality of data sources with equipment common to each of said data sources, comprising first memory means in each of said data sources for receiving and storing input data at a data rate, said first memory means in response to an output enable signal (OE) and a plural bit read address signal ($A_0$-$A_7$), providing to said common equipment data specified by said plural bit read address signal, and second memory means in each of said data sources providing at least a portion ($A_2$-$A_4$) of said read address signal, characterised in that said apparatus further comprises counter means in said common equipment for counting at said data rate, at least a portion of the output of said counter being provided as a second memory address input, in that said second memory means comprising programmable second memory means providing its output in response to said second memory address input, and in that control means (CPU) are provided for programming said second memory means to thereby control correspondence between said second memory means output and said second memory address input.

In an embodiment of the invention, each second memory means is a mapping RAM. The common equipment provides identical addresses to each of the mapping RAMs in the interface modules, and the RAMs determine whether incoming or outgoing data is respectively written into or read from the associated interface module, and generate an address for the data which is written into or read from the interface module. A mapping RAM is provided in the common equipment to allow for burst-to-burst selection of data.

In an embodiment, the reorganization is accomplished by writing PCM data into buffer memories in a sequential order. Upon reading the PCM data from the memories, however, a different order of data selection is effected and functions to remove an individual channel from the complete sequence of PCM frames, whereupon the next channel of data is similarly extracted from the same series of PCM frames. The reorganization of data is physically accomplished by simply exchanging selected bits on the write address and read address lines.

Figure 1 is a schematic illustration of a single ground station having a plurality of PCM channel banks and terrestrial interface modules in communication with common time division multiple access equipment.

Figure 2 illustrates the interrelationship between the common equipment and each of the terrestrial interface modules for the transmit portion of the ground station.

Figure 3 is an illustration of the interrelationship between the common equipment and each of the terrestrial interface modules for the receive portion of the ground station equipment.

Figure 4 illustrates the PCM data throughout an entire TDMA frame.

Figure 5 illustrates the same PCM data reorganized so as to pack an entire channel of data into a contiguous block of time.

Figure 6 illustrates the format of an entire frame of TDMA data transmitted from the ground station to a satellite link.

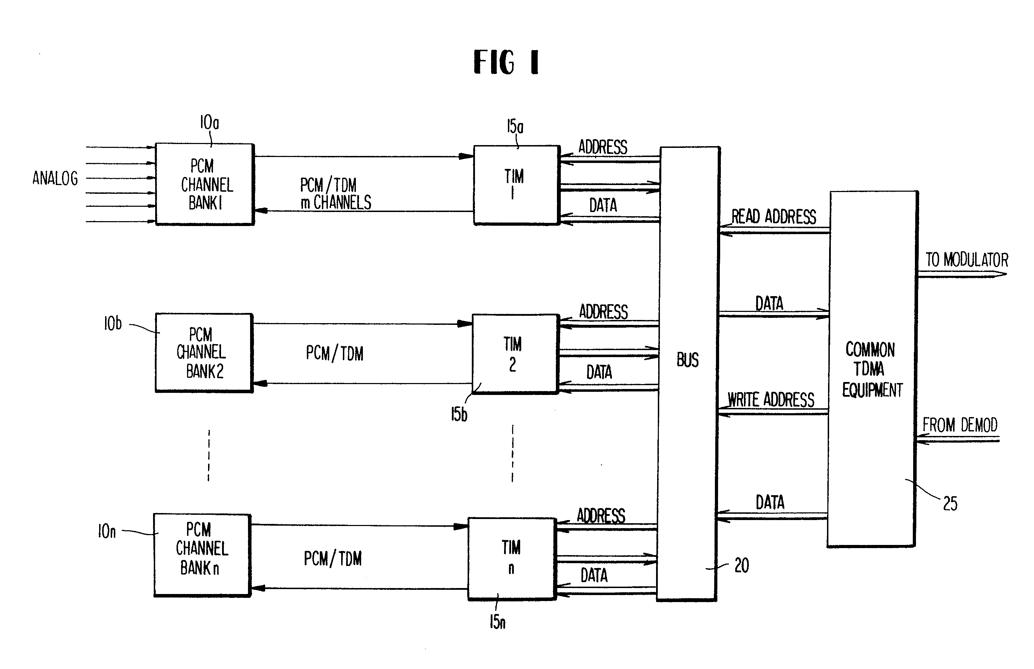

Figure 1 is a schematic illustration of the relevant portion of the TDMA circuit with which the present invention is concerned.  A plurality of analog channels which may be comprised of simple telephone lines for example are input to an associated 1 out of n PCM channel banks 10a through 10n.  Each PCM channel bank converts the parallel analog input signals to pulse code modulated (PCM) time division multiplexed (TDM) serial bit streams which are applied to an associated 1 out of n terrestrial interface modules (TIM) 15a through 15n.  Under the selective control of common TDMA (time division multiply access) equipment 25, the data from the appropriate TIM is delivered to bus 20 at the proper time where it is then delivered to the common TDMA equipment 25.  The common TDMA equipment 25 processes the data so provided and delivers it to a modulator.  The processing involved in the common TDMA equipment and subsequent modulation does not represent a part of the subject invention.

Data returning to the common TDMA equipment 25 from the demodulator is applied to the appropriate TIM module through bus 20 at the proper time.  The appropriate TIM module is selected by the common equipment 25 by providing an address to all of the TIM modules simultaneously; the particular address so provided will cause the data to be written into only one of the TIM modules 15a through 15n.  The data words provided to the TIM modules 15a through 15n are subsequently delivered to PCM channel banks 10a through 10n where they are demultiplexed and provided as a plurality of parallel analog signals from each of the channel banks.

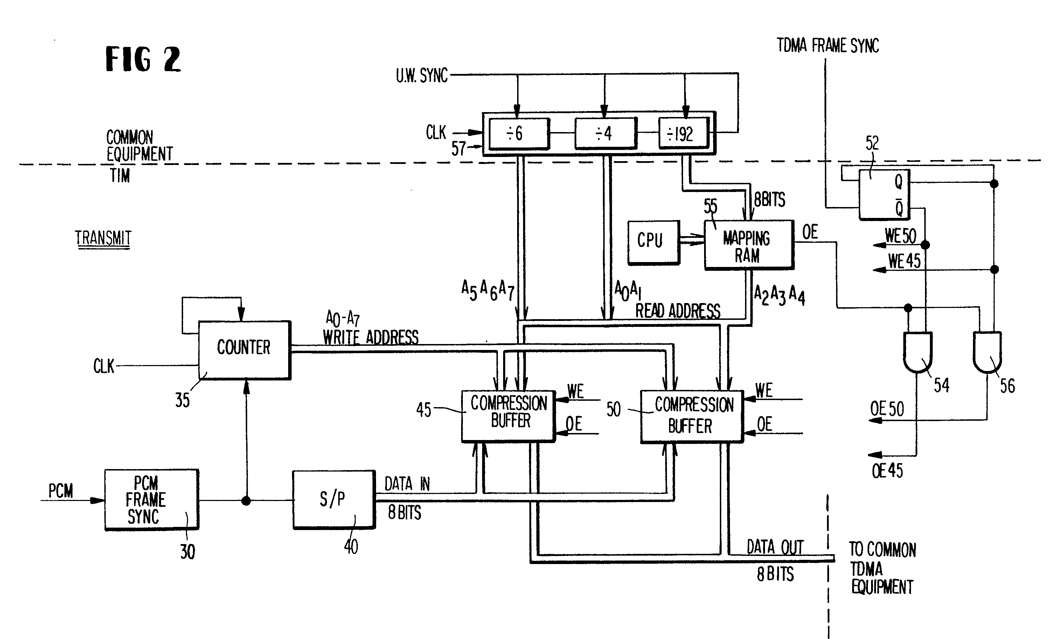

The invention is described in greater detail with reference to Figures 2-5.  Figure 2 illustrates the transmit portion of one of the TIMs of Figure 1 and the associated common TDMA equipment with which it communicates through bus  structure 20.  The PCM encoded data is delivered to PCM frame synchronization means 30 which detects the position of each PCM frame and delivers a frame synchronization signal to counter 35 which is clocked at a rate equal to the PCM data word rate. The various synchronization signals referred to throughout this specification may be provided in any well-known manner. The PCM encoded data is then delivered to serial to parallel converter 40 where the serial PCM data is converted to a parallel format. The parallel PCM data is delivered along an 8 bit data bus to one of two tristate compression buffers 45 or 50 under the selective control of write enable pulses delivered to one of the compression buffers from flip-flop means 52. The flip-flop means 52 is synchronized with the TDMA frame in a well-known manner and provides a "ping-pong" action between compression buffers 45 and 50. The PCM data is written into one of the buffers 45 or 50 at a location determined by counter 35 which provides an address along the write address bus.

Contemporaneously with the write operation in one of compression buffers 45 and 50, a read operation is performed on the other compression buffers 45 and 50 under the control of flip-flop means 52, mapping RAM 55 AND gates 54 and 56. The mapping RAM 55 provides the output enable signal OE whenever data is to be read into one of compression buffers 45 and 50. The signal OE is further combined with the write enable signals WE 45 and WE 50 in AND gates 54 and 56 so that data is output from the compression buffer which does not have a write enable signal applied to it at that particular point in time. The data from the other of compression buffers 45 and 50 is read from an address provided on the read address bus as shown in the figure. The read address is provided from both the counter circuit 57 in the common TDMA equipment which counts at a clock rate equal to the PCM data word rate and form mapping RAM 55. The common TDMA equipment provides address bits $A_0$, $A_1$, $A_5$, $A_6$, and $A_7$ while mapping RAM 55 provides bits $A_2$ through $A_4$.

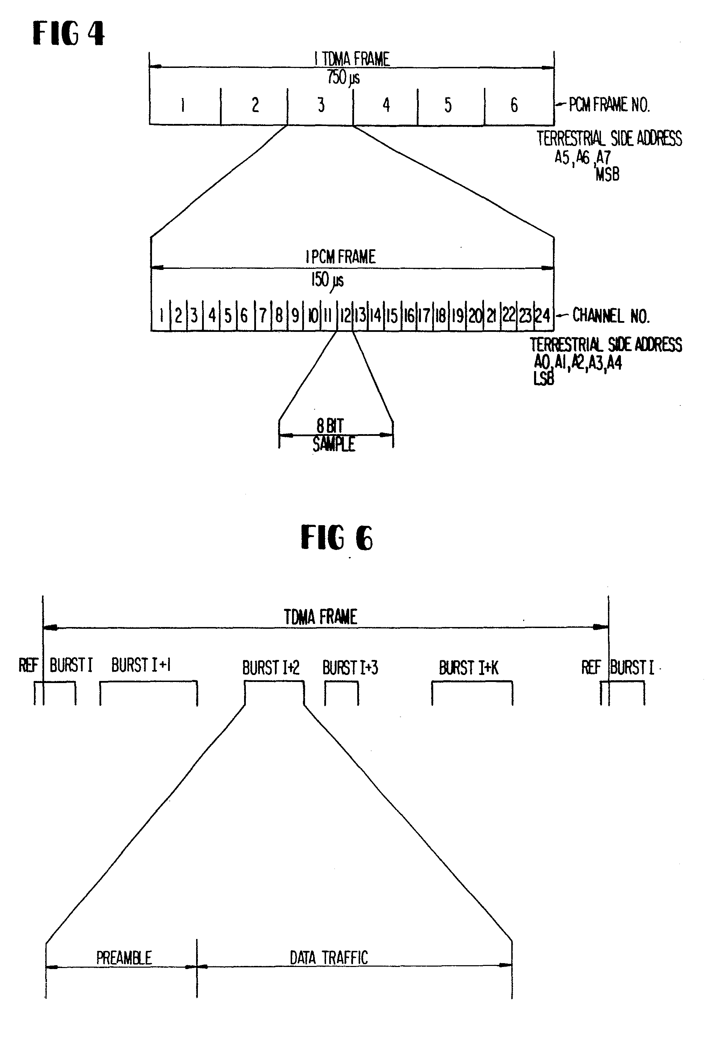

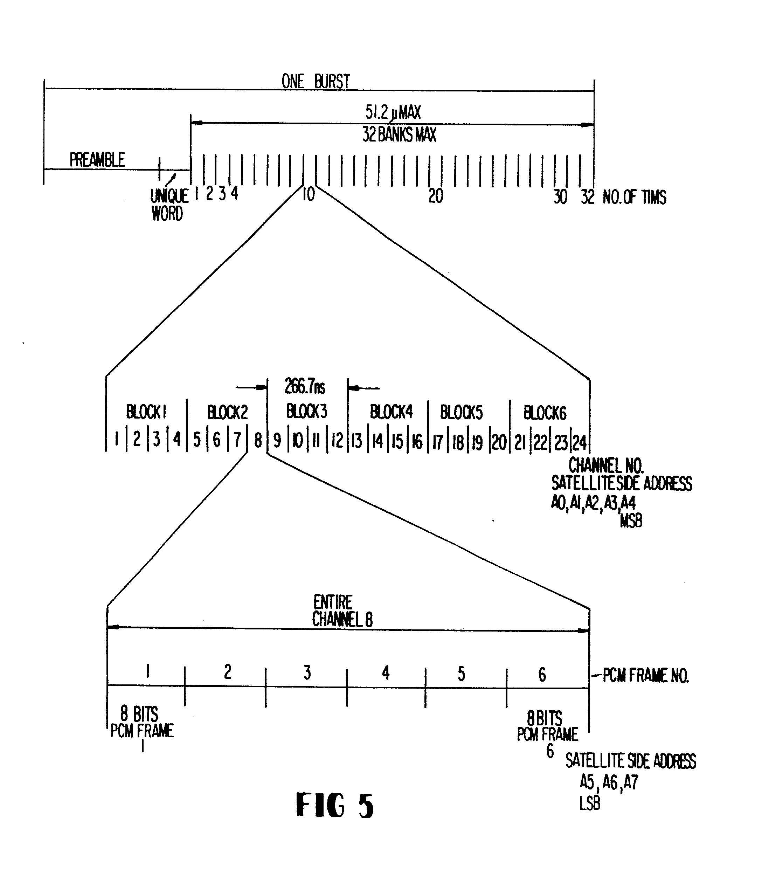

The data is rearranged upon reading from compression buffers 45 or 50 in a manner explained with reference to Figures 5 and 6. Figure 4 illustrates the data bit stream of 8 bit parallel PCM data provided from serial to parallel converter 40 to one of compression buffers 45 or 50. Each of the PCM channel banks 10a through 10n, Figure 1, provides 24 channels of PCM data to the TIM. Each of the channels in one PCM frame comprise a single 8 bit sample from the individual channel. The time division multiplexed nature of the PCM frame is illustrated in Figure 4 where it is seen that an 8 bit data sample from channel 1 is immediately followed by an 8 bit data sample from channel 2 and so on through channel 24. The PCM frame repeats itself upon reaching channel 24 wherein the next 8 bit sample will be from channel 1. In this manner, a single TDMA frame comprised of 6 sequential PCM frames (total of 750 ms) is established. It should be noted that the number of PCM frames contained in a TDMA frame is a matter of choice and can be varied to accommodate the user's needs.

Figure 4 also illustrates the address allocated to each of the PCM data samples from each of the channels. Since there are 24 channels in a single PCM frame, the particular channel in a PCM frame can be identified with a minimum of 5 bits ($2^5 = 32$), namely, $A_0$ through $A_4$. The particular PCM frame that the channel is contained in can be identified by a minimum of 3 bits ($2^3 = 8$), namely, $A_5$ through $A_7$. In other words, bits $A_0$ through $A_4$ indicate to which of channels 1 through 24 the 8 bit sample belongs, while bits $A_5$ through $A_7$ indicate to which of the PCM frame numbers 1-6 the 8 bit sample belongs. The bits $A_0$ through $A_7$ are provided to write address inputs of compression buffers 45 and 50 by means of counter 35 synchronized to each of the PCM 8 bit samples as discussed with reference to Figure 2. The address bus from counter 35 is tied to the write input lines of buffers 45 and 50 so as to make bit $A_0$ the least significant while $A_7$ is the most significant bit.

The data is read out of the other of compression buffers 45 or 50 under the control of the read address bus which is provided with a portion of the address by mapping RAM 55 and a second portion of the address from the common TDMA equipment. The bits $A_0$ through $A_7$ are provided to the compression buffers 45 or 50 in an order different than that provided for the write address. Specifically, with reference to Figure 5, it is seen that the address is comprised of address bit $A_5$ as the least significant bit in the address followed by $A_6$, $A_7$ and $A_0$ through $A_4$, $A_4$ being the most significant bit. Leading the data out of memory in this manner effects a reorganization of the data so as to pack all the bits associated with a single channel into a single contiguous block of time for an entire TDMA frame. This structure allows the data mapping, described below, to be independent of the number of PCM frames in a TDMA frame length.

A comparison of Figures 4 and 5 illustrates how this reorganization is achieved. Reiterating, bits $A_0$ through $A_4$ indicate from which of the 24 channels the 8 bit data sample belongs while bits $A_5$ through $A_7$ indicate in which of the PCM frames within a single TDMA frame the sample belongs. The 8 bit data samples are read out of memory under the control of counter 57 having address bits $A_5$ through $A_7$, $A_0$ and $A_2$ as outputs, and mapping RAM 55 having $A_2$ - $A_4$ as outputs, $A_5$ being the least significant bit and $A_4$ being the most significant bit in the address. Inasmuch as bits $A_5$ through $A_7$ are cycled through before bits $A_0$ through $A_4$, 8 bit samples from a single channel (defined by $A_0$ through $A_4$) will be sequentially read from compression buffers 45 or 50 from consecutive PCM frames 1 through 6 as defined by $A_5$ through $A_7$. As the first channel sample is read out of memory from the six PCM frames, counter 57 which delivers the bits $A_5$ through $A_7$ will reset and bits $A_0$ through $A_4$ will increment so that the next channel will be read out from each of the six PCM frames within the TDMA frame. Bits $A_0$ - $A_4$ will similarly reset upon counting 24 channels.

0112477

The reorganized data shown in Figure 5 illustrates that an entire PCM channel (channel "8" for example) is now "packed" within a single block of time. As each of the channels is so packed, the data is rearranged in consecutive channels as shown and grouped into blocks of four channels defined by the bits $A_2$ through $A_4$, three bits defining one of six blocks of data. The particular channel within any one of the blocks is defined by bits $A_0$ and $A_1$.

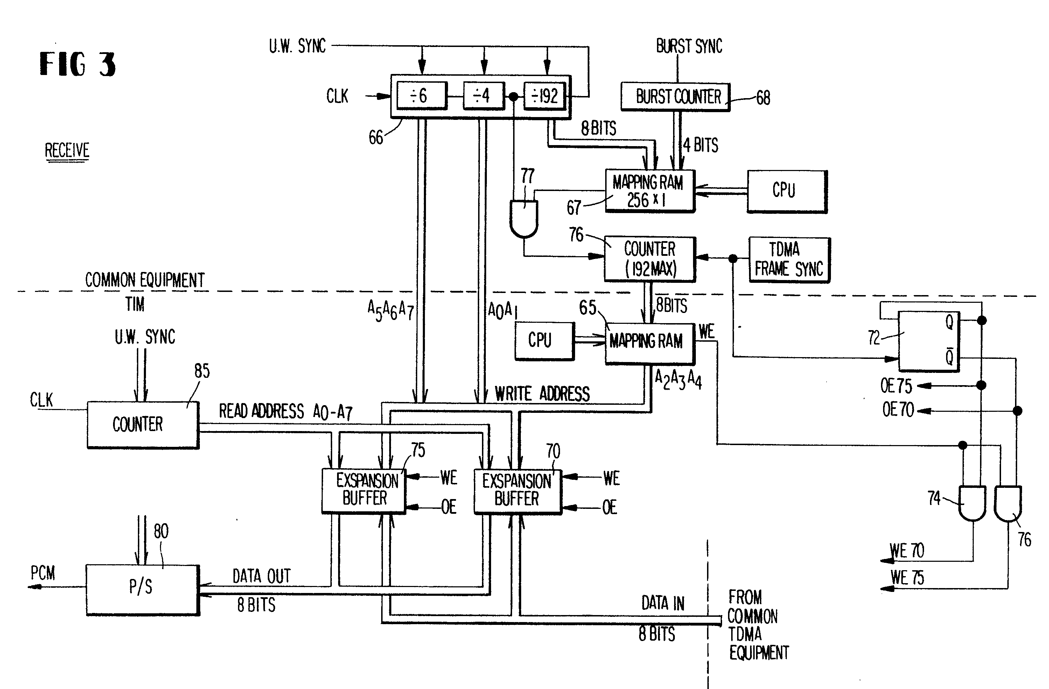

Referring to Figure 1, rearranged data is delivered to the remaining TDMA system, via the common TDMA equipment, where it is transmitted to a communications satellite. Data returning to the common TDMA equipment 25 from a communications satellite is delivered from the common TDMA equipment 25 to the various TIMs 15a through 15n along bus structure 20. The received portion of the various TIM's common equipment and the associated bus structure are illustrated in Figure 3. Address bits $A_5$ - $A_7$, $A_0$ and $A_1$ are delivered from the counter 66 in the TDMA common equipment directly to the write address bus, while bits $A_2$ - $A_4$ are delivered to the address bus from mapping RAM 65. The data from the common TDMA equipment is applied to the 8 bit data bus as shown in Figure 3. Data is written into one of expansion buffers 70, 75 under the control of write enable pulses WE 70 and WE 75 produced by AND gates 74 and 76. The flip-flop 72 is operated synchronously with the TDMA frame in a well-known manner to produce output enable pulses OE 70 and OE 75 and provides the "ping-pong" operation of expansion buffers 70 and 75 similar to the "ping-pong" operation of compression buffers 45 and 50. The write address bus is hard wired to buffers 70 and 75 so that bit $A_5$ constitutes the least significant bit of the address while bit $A_4$ is the most significant bit. In this manner, the data is written into the expansion buffer 70 and 75 in the same manner as it was read out of compression buffers 45 and 50.

Contemporaneously with the above-mentioned write operation into one of expansion buffers 70 and 75, a read operation is effected in the other of the expansion buffers. The read address delivered to the expansion buffers is produced by counter 85 synchronized in a well-known manner with the unique word contained in the preamble of the burst illustrated in Figure 5 and clocked at the PCM data word rate. Bits $A_0$ through $A_7$ in the read address are hard wired to the expansion buffers 70 and 75 so that bit $A_0$ is the least significant bit and bit $A_7$ is the most significant bit. In this manner the data is rearranged from the format illustrated in Figure 5 to the terrestrial side format illustrated in Figure 4. The data so read out of the other of expansion buffers 70 and 75 is delivered to parallel to serial converter 80 to provide a serial bit stream of PCM data to one of the associated PCM channel banks 10a through 10n.

The address mapping function of mapping RAMs 55, 65 and 67 will now be discussed. In Figure 1, it is seen that a multiplexing and demultiplexing operation must be effected between the plurality of TIMs 15a-15n and the common TDMA equipment 25. Prior art techniques employ standard multiplexer/demultiplexer systems which are large in size and inflexible in nature. That is, the channel allocation for each burst of data for each TIM must be preset by the multiplexer and changes in channel and/or burst allocation for any one of the TIMs requires a substantial reorganization of the multiplex/demultiplex operation.

The TIM bus structure of the present invention employs the mapping RAMs 55, 65 and 67 so that channel and burst allocation for the TIMs can be changed in real time, and the flexibility of the channel and burst allocation is greatly enhanced over the prior art systems.

With reference to Figure 2, the mapping operation of the transmit portion of the TIM bus structure will be described. As noted above, the counter 57 counts at the PCM data word rate (PCM frame number, Figure 5), and is synchronized with each burst by means of the unique word synchronization signal. The counter 57 is comprised of three portions: a first divide-by-6 portion having a 3 bit output and connected to a second divide-by-4 portion having a 2 bit output. The divide-by-4 portion of counter 57 is further connected to a divide-by-192 portion having an 8 bit output. The divide-by-6 portion of counter 57 comprises the least significant bits in the counter $A_5$, $A_6$ and $A_7$, which correspond to the identification of the PCM frame number of the PCM word currently being read from one of compression buffers 45 or 50 (see Figure 5). The next two bits $A_0$ and $A_1$, the outputs from divide-by-4 portion of counter 57, indicate in which of the four channels within the six blocks of the PCM data word currently being processed belongs. The 8 bit output of the next portion of counter 57 indicates which block of data is currently being read from one of compression buffers 45 or 50. With reference to Figure 5, it is noted that each TIM typically contains 24 channels of data, the channels being divided up into six blocks of four channels each. Inasmuch as the example used in accordance with the present invention employs up to 32 TIMs, there are 192 (6 x 32) blocks which must be identified within any one burst of data. The divide-by-192 portion of counter 57 so defines the particular block of data within the entire burst which is presently being read out of one of compression buffers 45 or 50.

The 8 bit block identification number is delivered to mapping RAM 55 which is contained in each of the TIMs 15a through 15n. Each of the mapping RAMs in the TIMs are individually programmed so as to recognize the particular block of data defined by the 8 bit identification number, and to provide the output enable signal OE whenever the mapping RAM determines that its associate TIM should provide that particular block of data. This represents a simple decoding of the block number by each TIM and provides the TIM with the information as to when it should transmit data to the common equipment. For example, TIM No. 10 can be assigned to transmit data on blocks 5, 150 and 151 by having the mapping RAM 55 in TIM No. 10 simply recognize blocks 5, 150 and 151 from the 8 bit input from counter 57 and deliver the output enable signal in response thereto.

Insofar as mapping RAM 55 for each of the TIMs "knows" which of the 192 blocks is currently being processed, in addition to providing the output enable signal, it can be further programmed to provide bits $A_2$ to $A_4$ to the read address since these bits define which of the six blocks of data is being processed by the individual TIM. In the example shown in Figure 5, a count of "150" from divide-by-192 portion of counter 57 would produce a "block 1" indication from bits $A_2$ - $A_4$. As counter 57 increments to indicate that block 151 is being processed, mapping RAM 55 would indicate "block 2" on bits $A_2$ - $A_4$.

It can now be seen that the mapping RAM arrangement allows the allocation of any one of the 192 blocks of data to any particular TIM in any particular order. Each of the four channels of data contained in any one of the blocks so processed by the TIM contains the entire channel information for an entire PCM frame. The subsequent addition or changes to the number of PCM channels, therefore, has little effect on the entire PCM/TDM system. Any changes needed to compensate for changes in system requirements can be accomplished by simply reprogramming the mapping RAMs 55 which are in communication with a central processing unit as shown. This reprogramming of the mapping RAMs can also effect a simple change in channel allocation as desired.

The receive portion of the TIM bus structure will be discussed with reference to Figures 3 and 6. Figure 6 illustrates the general format of an entire frame of TDMA data. The TDMA frame consists of a series of bursts, each burst provided by a unique ground station.

Each of the ground stations in communication with the transponding satellite can select the particular stations from which it receives data. The TIMs on the receive side of the terrestrial station can further choose which of the channels (in blocks of 4) it wishes to receive from any one of the station bursts within the TDMA frame. The common TDMA equipment as shown in Figure 3 consists of a 4 bit burst counter 68 which is clocked by the burst synchronization signal which is provided in a well-known manner. In this way the counter 68 keeps track of which particular burst is currently being received by the common equipment and delivers this information in 4 bits to mapping RAM 67. Counter 66 is similar to the counter 57 of Figure 2 and keeps track of which PCM frame number, channel number and block number is currently being received by the common equipment. The mapping RAM 67 is programmed first to recognize the particular burst from which is desired to receive information. It should be noted that with the arrangement of mapping RAMs shown in Figure 3, any one of the TIMs in the associated terrestrial station can receive information from any combination of the plurality of bursts illustrated in Figure 6 by programming the mapping RAM to provide the appropriate output when the chosen burst is being received. Mapping RAM 67 further keeps track of which of the 192 blocks of information is currently being received within the particular burst as indicated by divide-by-192 portion of counter 66. Whenever mapping RAM 67 determines that the particular block of information in the particular burst presently being received by the common equipment corresponds to a block of data which is to be received by one of the TIMs, it produces a 1 bit output which is applied to AND gate 77. The output of divide-by-4 portion of counter 66 is also applied to the second input of AND gate 77. The 1 bit output from mapping RAM 67 (low in this case) allows the AND gate 77 to pass the clocked count from counter 66 to counter 76. This arrangement effects an initialization of the block count in counter 76 so that block No. 1 from burst I will not be confused with block No. 1 from burst I + 1. In other words, the counter 76 will sequentially reorganize the blocks of data which are to be received by the common equipment over the entire TDMA frame as shown in Figure 6. The counter 76 counts to a maximum of 192 blocks for reception and delivers the 8 bit block count to each of the receive portions of TIMs 15a through 15n. The mapping RAM 65 of each of the TIMs "recognizes" the particular reorganized block of data presently being delivered on the 8 bit data input line from the common equipment and produces a write enable pulse whenever that particular block of data is assigned to the associated TIM.

The mapping RAMs 55, 65 and 67 are programmed to provide the above-mentioned input/output functions in a manner well-known to those skilled in the art. Table I is provided to illustrate one of the many schemes of programming RAMS 55 or 65. The memories are provided with a 4 bit output corresponding to bits $A_2$ through $A_4$ and the enable output. These outputs are located in locations of memory defined by the 8 bit address. In the example shown in Table I, the mapping RAMS 55 or 65, respectively, read or write in response to blocks 6, 32 and 33. When these blocks are indicated on the 8 bit input lines to RAMs 55 or 65, each RAM will output the appropriate enable signal to effect an output or write operation and will further provide bits $A_2$ through $A_4$. The example shown in Table I assigns block 6 (out of 192 blocks) as block 6, block 32 as block 2 (bits $A_5$ through $A_7$, $A_0$ and $A_1$ have changed since block 6), and block 33 as block 3. The particular assignment of blocks in the mapping process is a matter of choice and merely requires that the users keep track of the particular assignments. The programming of mapping RAM 67 is simplified insofar as it need only produce a 1 bit output corresponding to the proper block and burst for reception.

Mapping RAMs 55, 65 and 67 are connected to a CPU whereby a reorganization of the data selected by any one or all of the TIMs can be effected. A simple reprogramming of mapping RAMs 67 can change the burst or bursts

TABLE I - RAM 55 OR 65

| 8 BIT Address | (Block No.) | OUTPUT BITS $A_2A_3A_4$ | Enable/Disable |
|---|---|---|---|
| 00000000 | (0) | XXX | D |
| . | | . | |
| . | | . | |
| . | | . | |
| . | | . | |
| . | | . | |
| 00000110 | (6) | 110 | E |
| 00000111 | (7) | XXX | D |
| . | | . | |
| . | | . | |
| . | | . | |
| . | | . | |
| 00100000 | (32) | 010 | E |
| 00100001 | (33) | 011 | E |
| 00100010 | (34) | XXX | D |
| . | | . | |
| . | | . | |
| . | | . | |
| . | | . | |

from which information is received at the TIMs so that the TIMs can receive information from any terrestrial station contributing a burst to the TDMA frame. The particular block of data within any one of the selected bursts can also be selected by any one of the TIMs through a simple reprogramming of mapping RAM 65 by the CPU in a manner similar to that of the transmit mapping RAM 55, Figure 2.

Thus, the present invention teaches a technique for performing a data reorganization so as to "pack" an entire PCM channel within a single block of time. The invention further teaches the use of a plurality of mapping RAMs to effect a compact and flexible bus structure for interfacing a plurality of TIMs with common TDMA equipment.

0112477

CLAIMS:

1.    Apparatus for selectively multiplexing a plurality of data sources (15) with equipment (25) common to each of said data sources, comprising a first memory means (45; 50) in each of said data sources (15) for receiving and storing input data at a data rate, said first memory means (45; 50) in response to an output enable signal (OE) and a plural bit read address signal ($A_0$-$A_7$), providing to said common equipment (25) data specified by said read address signal, and second memory means (55) in each said data source for providing a second memory output comprising at least a portion of said read address signal, characterized in that said common equipment (25) includes counter means(57) for counting at said data rate, said counter means (57) having a first section providing a first portion ($A_0$, $A_1$, $A_5$, $A_6$, $A_7$) of said read address signal ($A_0$-$A_7$) and having a second section, and in that said second memory means (55) receives a plural bit output from said second counter section as an address input and provides  a corresponding second memory output as a second portion ($A_2$, $A_3$, $A_4$) of said read address signal ($A_0$-$A_7$).

2.    Apparatus as claimed in Claim 1, characterized in that at least one bit of said second memory output comprises said output enable signal (OE) such that said second memory means (55) in each of said data sources (15) selectively controls which of said data sources provide  data to said common equipment (25).

3.    Apparatus for selectively demultiplexing a sequence of data from equipment (25) common to a plurality of data users (15), comprising first memory means (70; 75) in each of said data users (15) for receiving data from said common equipment (25) at a data rate and, in response to a write enable signal (WE) and a plural bit write address signal ($A_0$-$A_7$), storing said data at memory locations specified by said write address signal, said first memory means (70; 75) providing output data to its respective data user (15) in response to an output enable signal (OE) and a read address, first counter means (66) in said common equipment for counting at said data rate, said counter providing at least a portion of said write address signal ($A_0$-$A_7$), characterized in that said write address signal ($A_0$-$A_7$) includes first and second portions, in that said first counter means (66) includes a first section providing a first portion ($A_0$, $A_1$, $A_5$, $A_6$, $A_7$) of said write address signal and having a second section, in that said common equipment includes a second counter means (76) providing a first set of read address outputs, and in that second memory means (65 ) are provided in each of said data users (15), said second memory means (65) receiving an output from said second counter (76) as an address input and providing a corresponding second memory output, the output of said second memory means comprising said second portion ($A_2$, $A_3$, $A_4$) of said write address signal.

4.     Apparatus as claimed in Claim 3, characterized in that at least one bit of said second memory output comprises said write enable signal (WE) such that said first memory means (70; 75) in each of said data users (15) stores only selected portions of said sequence of data received from said common equipment (25).

5.     Apparatus as claimed in Claim 3 or 4, characterized in that said second memory means (65) is programmable, and in that control means (CPU) are provided for programming said second memory means (65) to thereby vary the correspondence between the address input received by the second memory means (65) and the second memory output.

6.     Apparatus as claimed in Claim 1 or 2, characterized in that said second memory means (55) is programmable, and in that control means (CPU) are provided for programming said second memory means (55) to thereby vary the correspondence between the address input received by the second memory means (55) and the second memory output.

7.     Apparatus for selectively multiplexing a plurality of data sources (15) with equipment (25) common to each of said data sources, comprising  first memory means (45; 50) in each of said data sources (15) for receiving and storing input data at a data rate, said first memory means (45, 50) in response to an output enable signal (OE) and a plural bit read address signal ($A_0$-$A_7$), providing to said common equipment (25) data specified by said plural bit read address signal, and second memory means (55) in each of said data sources providing at least a portion ($A_2$-$A_4$) of said read address signal, characterized in that said apparatus further comprises counter means (57) in said common: equipment (25) for counting at said data rate, at least a portion of the output of said counter being provided as a second memory address input, in that said second memory means (55) comprising programmable second memory means providing its output in response to said second memory address input, and in that control means (CPU) are provided for programming said second memory means to thereby control correspondence between said second memory means output and said second memory address input.

8.     Apparatus as claimed in Claim 1, 2, or 6 characterized in that said output enable signal (OE) in each said data source (15) causes said associated first memory means (45; 50) to select data from a bank of input data stored in said first memory means, and in that said selected data is delivered to said common equipment (25) such that said common equipment receives a sequence of data from a plurality of said data sources (15).

9. Apparatus as claimed in Claim 8, characterized in that said sequence of data is arranged in a series of said data banks, each said data bank is arranged in a series of blocks, each said block is arranged in a series of data channels, and each said data channel is arranged in a series of PCM frames.

10. Apparatus as claimed in Claim 9, characterized in that said first portion ($A_0$, $A_1$, $A_5$, $A_6$, $A_7$) of said read address signal identifies one of said channels in said selected data and one of said PCM frames in said identified channel.

11. Apparatus as claimed in Claim 9 or 10, characterized in that said second portion ($A_2$, $A_3$, $A_4$) of said read address signal identifies one of said blocks in said sequence of data.

12. Apparatus as claimed in Claim 11 characterized in that each said block comprises at least one of said data channels.

13. Apparatus as claimed in any of Claims 8 to 12, characterized in that not more than one of said second memory means (55) in each said data source provides said output enable signal (OE) at any time during said sequence of data.

14. Apparatus as claimed in Claim 4, characterized in that said common equipment (25) provides a frame of data to said data users (15), in that said write enable signal (WE) in each data user causes said associated first memory means (70; 75) to write into said associated first memory means selected data from a selected data bank in said frame of data, and in that said selected data is delivered to said data user.

15. Apparatus as claimed in Claim 14, characterized in that said frame of data is arranged in a series of sequences, each said sequence of data is arranged in a series of said data banks, each said data bank is arranged in a series of blocks, each said block is arranged in a series of data channels, and each said data channel is arranged in a series of PCM frames.

16. Apparatus as claimed in Claim 15, characterized in that said first portion ($A_0$, $A_1$, $A_5$, $A_6$, $A_7$) of said write address signal identifies one of said channels in said selected data and one of said PCM frames in said identified channel.

17. Apparatus as claimed in Claim 15 or 16, characterized in that said second set of read address outputs identifies one of said blocks in said frame of data.

18. Apparatus as claimed in Claim 15, 16 or 17 characterized in that said second portion ($A_2$, $A_3$, $A_4$) of said write address signal identifies one of said blocks in said selected data bank.

19. Apparatus as claimed in Claim 18, characterized in that each said block comprises at least one said data channel.

20. Apparatus as claimed in any of Claims 3 to 5, or 14 to 19, characterized in that said common equipment (25) comprises a third memory means (67) and a third counter 68, the second section of the first counter means (66) and said third counter (68) providing a second set and a third set of read address outputs, respectively, to said third memory means, said third memory means (67) providing a count enable signal to said second counter means (76).

21. Apparatus as claimed in Claim 20, characterized in that said second set of read outputs identify one of

0112477

said blocks in one of said sequences of data, and said
third set of read address outputs identify one of said
sequences of data in said frame of data.

FIG 1

# FIG 2

TDMA FRAME SYNC

U.W. SYNC

CLK → [÷6] — [÷4] — [÷192]     57

52

Q
Q̄

COMMON
EQUIPMENT
TIM

TRANSMIT

55    8BITS
CPU → MAPPING RAM    OE

WE50
WE45

A5 A6 A7          A0 A1          A2 A3 A4
              READ ADDRESS

A0-A7
WRITE ADDRESS

COUNTER

CLK →

35

54    56

OE50

COMPRESSION BUFFER    WE    50    COMPRESSION BUFFER    WE
45                    OE                              OE

OE45

PCM →  PCM FRAME SYNC       S/P       DATA IN
                                      8 BITS

30        40

DATA OUT    TO COMMON
8 BITS      TDMA EQUIPMENT

# FIG 3

**FIG 4**

I TDMA FRAME
750 µs

| 1 | 2 | 3 | 4 | 5 | 6 |

— PCM FRAME NO.

TERRESTRIAL SIDE ADDRESS
A5, A6, A7
MSB

I PCM FRAME
150 µs

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

— CHANNEL NO.

TERRESTRIAL SIDE ADDRESS
A0, A1, A2, A3, A4
LSB

8 BIT
SAMPLE

**FIG 6**

TDMA FRAME

| REF | BURST I | BURST I+1 | BURST I+2 | BURST I+3 | BURST I+K | REF | BURST I |

PREAMBLE | DATA TRAFFIC

ONE BURST

51.2 μ MAX

32 BANKS MAX

PREAMBLE

UNIQUE WORD

1 2 3 4     10     20     30 32   NO.OF TIMS

266.7 ns

| BLOCK 1 | BLOCK 2 | BLOCK 3 | BLOCK 4 | BLOCK 5 | BLOCK 6 |
|---|---|---|---|---|---|
| 1 2 3 4 | 5 6 7 8 | 9 10 11 12 | 13 14 15 16 | 17 18 19 20 | 21 22 23 24 |

CHANNEL NO.
SATELLITE SIDE ADDRESS
A0, A1, A2, A3, A4
MSB

ENTIRE CHANNEL 8

1    2    3    4    5    6    —PCM FRAME NO.

8 BITS
PCM FRAME

8 BITS
PCM FRAME

6

SATELLITE SIDE ADDRESS
A5, A6, A7
LSB

**FIG 5**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A,D | DE-A-2 164 016 (STANDARD ELEKTRIK LORENZ) <br><br> *Page 3, line 13 - page 6, line 25; figures 1-3* | 1,3,4, 7-12, 14-19 | G 06 F 13/00 <br> H 04 B 7/185 |
| | --- | | |
| A,D | US-A-3 806 879 (SCHMIDT) <br><br> *Column 25, line 31 - column 28, line 17; figures 14,14a and 15; claims 1-8* | 1,3,4, 7-12, 14-19 | |
| | --- | | |
| A | GB-A-1 017 591 (ASSOCIATED ELECTRICAL INDUSTRIES) <br><br> *Page 2, line 99 - page 3, line 113; figures 1-7* | 1,3,4, 7-12, 14-19 | |
| | --- | | **TECHNICAL FIELDS SEARCHED (Int. Cl. 3)** |
| A | ELECTRONIC DESIGN, vol. 27, no. 8, 12th April 1979, pages 118-121, Rochelle Park (USA); B.WARNER, Jr.: "Fast LSI memories cram more information into satellite-communications bands". *Page 119, left-hand column, lines 20-52* | 1,3,7 | G 06 F 13/00 <br> H 04 B 7/185 |
| | --- | | |
| A | US-A-3 922 643 (POOLE) <br> *Column 5, line 17 - column 8, line 27; figures 1,3,6* | 1,3,7 | |
| | --- -/- | | |

The present search report has been drawn up for all claims

| Place of search | Date of completion of the search | Examiner |
|---|---|---|
| THE HAGUE | 06-04-1984 | WANZEELE R.J. |

European Patent Office

0112477 Application number

EP 83 11 1305

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl. 3) |
|---|---|---|---|
| A | US-A-3 943 347 (MARTINSON) *Column 2, line 4 - column 9, line 5; figures 1-3* | 1,3,7 | |
| | ----- | | |
| | | | **TECHNICAL FIELDS SEARCHED (Int. Cl. 3)** |

The present search report has been drawn up for all claims

| Place of search | Date of completion of the search | Examiner |
|---|---|---|
| THE HAGUE | 06-04-1984 | WANZEELE R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

BAD ORIGINAL